Europäisches Patentamt

European Patent Office

Office européen des brevets

(11) Publication number: 0 367 409
A2

# EUROPEAN PATENT APPLICATION

(21) Application number: 89310144.4

(51) Int. Cl.5: C08J 9/10 , B29C 71/02

(22) Date of filing: 04.10.89

(30) Priority: 06.10.88 GB 8823484

(43) Date of publication of application:
09.05.90 Bulletin 90/19

(84) Designated Contracting States:
AT BE CH DE ES FR GB GR IT LI LU NL SE

(71) Applicant: ROSEANGLE FORTY ONE LIMITED
11 Whitehall Street
Dundee DD1 4AE Scotland(GB)

(72) Inventor: Foster, Richard John
94 Clarendon Road
Broadstone Dorset, BH18 9HY(GB)

(74) Representative: Pattullo, Norman et al
Murgitroyd and Company Mitchell House 333
Bath Street
Glasgow G2 4ER(GB)

(54) Method of producing a foamed polymer.

(57) A process for producing a foamed polymer, particularly a foamed polyofefin, of highly uniform low density.

A mixture of a polymer-forming material, a cross-linking agent, and a blowing agent is placed in a mould and reacted. This reaction product is cooled until the differential temperature between core and surface is below a predetermined maximum, and removed from the mould.

The cooled product is then subjected to dielectric heating, preferably by microwave irradiation, to cause uniform heating and highly uniform expansion to produce a foamed polymer of highly uniform low density.

The process of the invention enables production of relatively thick foamed polymers with a uniformity of density not possible with conventional foaming processes wherein high differential temperatures lead to non-uniform densities and distortions of the foamed product. The process of the invention also avoids the serious problems with excessive pressures encountered in attempting to produce highly foamed polymers in single-stage processes carried out entirely in closed moulds.

EP 0 367 409 A2

## Method of Producing a Foamed Polymer

This invention relates to a method of producing a foamed polymer.

There are many methods of compression moulding polyolefin foam sheets or slabs. All the methods require the ingredients to be compounded on a two-roll rubber mill or in an internal mixer and then put into a mould for heating in a press.

The ingredients generally comprise polyolefin resin such as polyethylene, polypropylene, EVA (ethylene vinyl acetate), EMA (ethylene methyl acrylate) or EAA (ethylene acrylic acid) or its ionomer, a blowing agent such as azodicarbonamide, and a cross-linking agent such as dicumyl peroxide. In addition, activator. lubricant, filler and pigment can be included.

A conventional method of producing polyolefin foams is a single stage process where the mixture is loaded into a mould and heated between the platens of a press at a temperature sufficient to decompose the peroxide which cross-links the polyolefin resin and sufficient also to decompose the blowing agent into gas. Expansion is effected by opening the press quickly, allowing the moulding to expand and jump from the mould.

A disadvantage of the single stage process is that low density foam cannot be produced simply by using large amounts of blowing agent because the high pressure generated in the mould (10,000 psi or more) can cause explosive decompression when the press is opened, thus destroying the moulding.

It has previously been proposed to use multi-stage processes to overcome this disadvantage of the single stage method. Most processes require the cross-linking and partial decomposition of the blowing agent in the press mould followed by further decomposition and expansion in a second mould or in an oven. All these processes suffer from limitations in thickness and also from variations in density caused by exothermic heat generated by the decomposition of the blowing agent.

Another process has been developed by Schering Industrial Products Limited called the "heat and chill" process which requires cross-linking of the resin and complete decomposition of the blowing agent in the primary mould followed by cooling in the mould to enable the moulding to be removed from the mould without significant expansion. The moulding is then reheated in a hot air oven to cause expansion at a controlled rate. A similar process is described in Japanese patent publication 57/25925.

It has been found that this process is not suitable for producing thick foam sheets, as thermocouple temperature measurements showed that the centre of the moulding remains very hot after the first stage even when the surface is cool enough for the moulding to be removed from the mould. It appears therefore that the heat of the oven only softens the outside of the moulding, allowing the hot centre and hence the entire moulding to expand. Polyolefin foam is a very good insulator and steep temperature gradients occur causing unequal expansion and stress through the moulding. When the moulding is sliced in a foam slitting machine the sheets of foam distort and warp.

It is therefore an object of the invention to provide a method of producing a foamed polymer, which method obviates or mitigates the disadvantages of prior methods.

According to a first aspect of the present invention there is provided a method of producing a foamed polymer, said method comprising the steps of providing a mixture comprising a material for forming a cross-linked polymer which is then to be foamed, said mixture further comprising a cross-linking agent and a blowing agent, said method further comprising the further steps of placing an amount of said mixture in a mould, heating the mixture in the mould to form a cross-linked polymer and to decompose the blowing agent, causing or allowing the cross-linked polymer to cool until the differential temperature between the surface of the cross-linked polymer and the interior of the cross-linked polymer falls below a predetermined maximum differential temperature, and then subjecting the cooled cross-linked polymer to dielectric heating such as to cause the cross-linked polymer to be heated and foamed.

The predetermined maximum differential temperature between the surface of the cross-linked polymer and the interior of the cross-linked polymer preferably comprises an excess of about 60 Centigrade degrees of the interior temperature over the surface temperature, more preferably about 40 Centigrade degrees, still more preferably about 20 Centigrade degrees, more preferably yet about 10 Centigrade degrees, and potentially small enough that surface temperature and interior temperature are substantially equal.

The dielectric heating to which the cooled cross-linked polymer is subjected is preferably produced by irradiation of the moulded polymer with microwaves which may be in the frequency range 300 MHz to 300 GHz (300 MegaHertz to 300 GigaHertz), but the dielectric heating may alternatively be produced by irradiation of the cross-linked polymer with radio-frequency waves, which may be in the frequency range 10 kHz to 300 MHz (10 kiloHertz to 300 MegaHertz).

The cooling of the cross-linked polymer incorporating the decomposed blowing agent may take place entirely before the cross-linked polymer is released from the mould for subsequent dielectric heating, or alternatively the cross-linked polymer incorporating the decomposed blowing agent may be partially cooled sufficiently that the mould may be opened and the partially cooled cross-linked polymer removed from the mould without substantive damage to the partially cooled cross-linked polymer for subsequent further cooling outside the mould until said differential temperature between the surface of the cross-linked polymer and the interior of the cross-linked polymer falls below said predetermined maximum differential temperature.

The process of the present invention may be carried out such that the blowing agent is substantially completely decomposed prior to cooling and subsequent dielectric heating, but it may alternatively be arranged that the blowing agent is not completely decomposed prior to cooling and is further decomposed to a significant extent during the dielectric heating. Similarly, the process of the present invention may be carried out such that cross-linking proceeds substantially to completion prior to cooling and subsequent dielectric heating, but it may alternatively be arranged that cross-linking does not proceed to completion prior to cooling and that cross-linking proceeds to a significant further extent during the dielectric heating.

Preferably the polymer is a polyolefin. Said material for forming a cross-linked polymer preferably comprises a polymer resin, more preferably a polyolefin resin.

Polar polymers such as EVA and EMA expand easily and rapidly under the influence of microwaves, but if the moulded material is of low polarity, for example by virtue of the polymer's structure or by virtue of decreasing levels of comonomer, the heating effect of the microwaves is diminished. The polarity of the material, and hence the effectiveness of the microwave heating, can be increased by adding to the mixture polar material such as (for example) carbon black, silica, zinc oxide or titanium dioxide, or small amounts of a polar polymer such as chlorinated polyethylene.

Thermoplastics having crystalline values greater than about 30%, for example high density polyethylene and polypropylene, require to be heated under pressure to effect their expansion. This is because crystalline polymers try to expand before the crystalline melting point is reached which cause splits and cracks in the moulded material. When the temperature of the moulded material has been raised above the crystalline melting point the pressure can be released which allows the moulded material to expand. It may be possible to expand low density polyethylene without application of pressure, and without cracks forming in the moulded material, since the main function of the pressure is to prevent premature expansion of edges and surfaces before all the slab is at a uniform temperature, but without pressure there may be some distortion in the final foam sheet.

The actual temperatures to which the cross-linked polymer is cooled may be such that the surface temperature is substantially indoor ambient temperature (so-called "room temperature") and the maximum interior temperature is higher than the surface temperature by not more than the predetermined maximum differential temperature, and preferably is higher by less than said maximum (tending to equality with the surface temperature with increased duration of cooling), but the cooling of the cross-linked polymer may be such that the surface temperature is reduced only to a much higher temperature, for example a temperature in the range of 60 degrees Centigrade to 80 degrees Centigrade.

The polymer temperature resulting from dielectric heating is preferably in the range 80 degrees Centigrade to 140 degrees Centigrade when the polymer is EVA, and may be higher for more crystalline polymers with higher melting points than EVA.

Where the dielectric heating is produced by microwave irradiation, suitable frequencies are 2450 MHz and 915 MHz, as being permitted microwave heating frequencies which do not interfere with microwave telecommunications; 2450 MHz is a preferred frequency for faster heating.

According to a second aspect of the present invention, there is provided a foamed polymer when produced by the method of the first aspect of the present invention.

The invention depends (in a non-limiting sense) on the surprising discovery that the relatively uniform heating effects obtainable with dielectric heating and especially with microwave irradiation to achieve out-of-mould foaming of a relatively thick polymer in a manner which leads to a highly uniform foam density (and minimal residual stresses after final cooling of the foamed product), despite the thickness of the finished foam, is achievable only by first cooling the unfoamed (or only partially foamed) polymer in a manner and to an extent which brings temperature differentials throughout the polymer below a level causing unacceptable density variations when subsequently reheated to cause (or to complete) foaming. Ideally, the temperature differentials, particularly between core and surface, could be zero or nearly so, but core/surface temperature differentials could be 10 Centigrade degrees, 20 Centigrade degrees, 40 Centigrade degrees, or up to 60 Centigrade degrees (or even more in suitable instances) without significant detriment to the uniformity of density in the finished foamed polymer; by way of contrast, the core/surface temperature differentials in prior art processes are believed to be of the order of 100 Centigrade degrees, and in any

3

event, prior-art multi-stage foaming processes are not known to use dielectric reheating (which is not required for the typically thin foam sheets resulting from prior art processes). During the dielectric heating stage of the present invention, minimisation or virtual elimination of temperature differentials prior to dielectric heating means that the polymer warms up and passes through its softening temperature (or softening temperature range) without excess temperature variations or hot-spots that would give rise to premature localised softening and/or non-uniform expansion of gas bubbles resulting from the decomposition of the blowing agent, and hence without giving rise to unwanted non-uniformities in the density of the finished foam. By way of further non-limiting explanation of the merits of the present invention, non-uniform re-heating of a polymer having a non-uniform internal temperature with a significantly higher core temperature in such a manner as to apply extra heating to the initially cooler outer regions of the polymer would not in practice lead to a uniform temperature rise to foaming temperatures, and hence would not eliminate non-uniformities in finished foam density.

Further advantages of the polymer forming and foaming process of the present invention lie in the relatively fast processing provided thereby and also the ability to transport unexpanded mouldings economically for expansion at distant locations.

Embodiments of the invention will now be described by way of several examples, and first referring to the accompanying drawings wherein:-

Fig. 1 shows the temperature/time graphs of surface and core temperatures of four different mixtures of polymer during the first (moulding) stage of a multi-stage foaming process; and

Fig. 2 shows the temperature/time graphs of surface and core temperatures of one of the mixtures of Fig. 1 during the first (moulding) stage of the same multi-stage foaming process, the mixture having four variations in additives thereto.

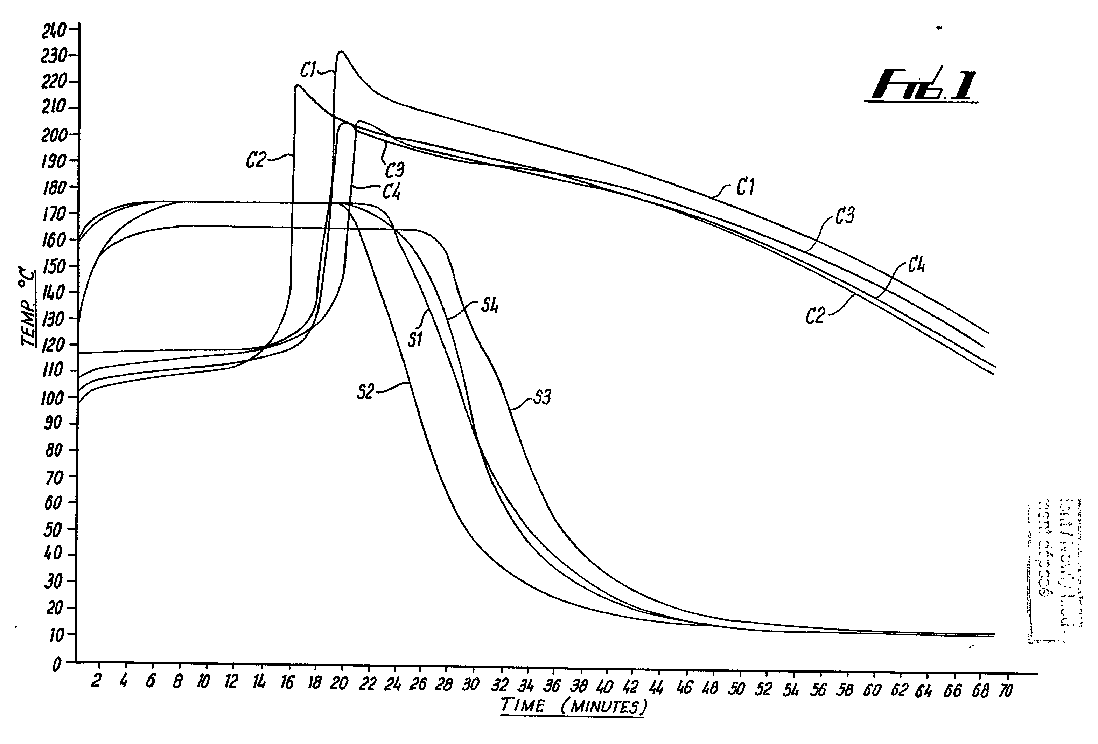

Referring first to Fig. 1, graphs S1, S2, S3, and S4 are the surface temperatures (in degrees Centigrade) of mixtures M1, M2, M3, and M4 respectively, being mixtures of a material forming a cross-linked polymer, in combination with a cross-linking agent and a blowing agent in each case. Graphs C1, C2, C3, and C4 are the core temperatures (in degrees Centigrade) of the mixtures M1, M2, M3, and M4 respectively. The common horizontal axis for all eight graphs in Fig. 1 is time (in minutes) from commencement of in-mould reactions.

In all four mixtures, the polymer-forming material was the same (EVA), while the differences between the mixtures lay in the differing proportions of azodicarbonamide ("Genitron AC4" (Schering)) and zinc compound blowing agent ("Genitron AF100" (Schering)).

The constituents of the mixtures are:-

```
Resin "Elvax 265"
   (EVA resin (Dupont))                      500 grammes


Light magnesium carbonate                     20 grammes
1.3/1.4 (bisterbutylperoxypropyl)
   benzene (peroxide "Retilox F40")    7.5 grammes


Azodicarbonamide
   ("Genitron AC4" (Schering))            See
Zinc compound blowing agent              'Table 1'
   ("Genitron AF100" (Schering))         below
```

4

TABLE 1

| Mixture No. | M1 | M2 | M3 | M4 |
|---|---|---|---|---|
| Azodicarbonamide (grammes) ("Genitron AC4" (Schering)) | 77.2 | 70.5 | 64 | 52 |
| Zinc compound blowing agent (grammes) ("Genitron AF100" (Schering)) | 6.65 | 17.5 | 24 | 36 |
| Zinc compound as percentage of total blowing agent | 6.8% | 19.88% | 27.2% | 40.9% |
| Temperature rise during moulding (Centigrade degrees) | 126 | 116 | 89 | 94 |

The mould used was 115 millimetres in diameter and 90 millimetres deep. It was fitted with a thermocouple in the centre of the cavity, and the stem of the thermocouple was insulated from the mould to prevent conduction of heat from the mould.

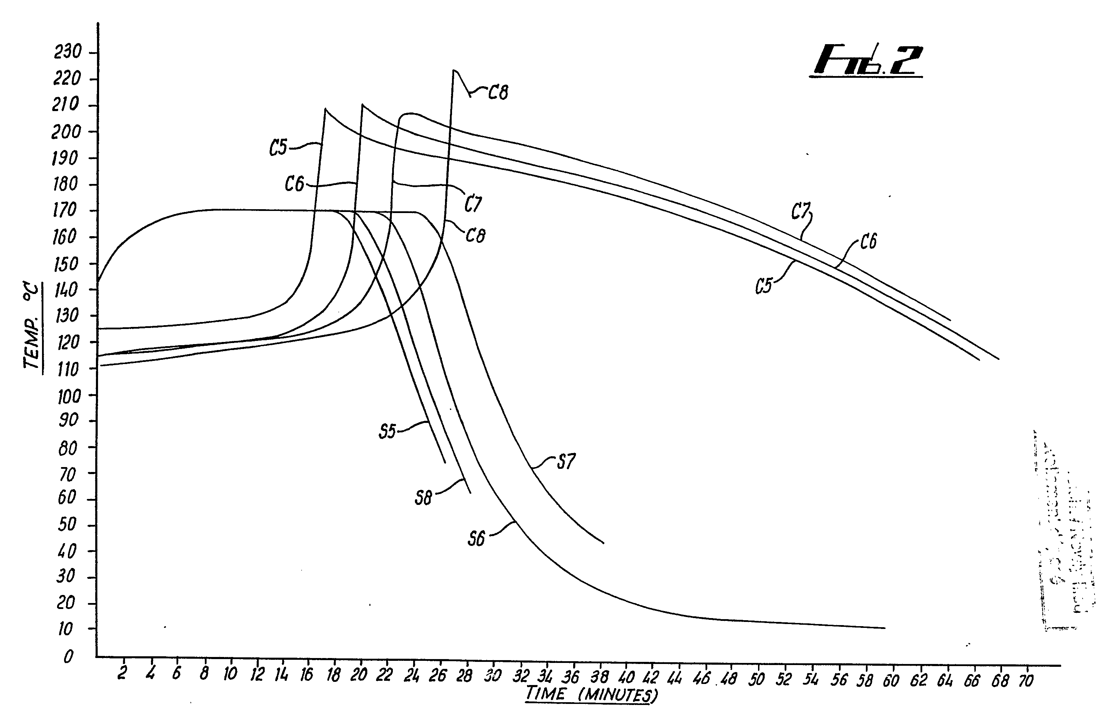

Figure 1 and Table 1 show that mixture M3 produced the lowest temperature rise of the samples tested. Referring now to Fig. 2, graphs S5, S6, S7 and S8 are the surface temperatures (in degrees Centigrade) of mixtures M5, M6, M7 and M8 respectively, being modifications (given below) of the mixture M3 described above. Graphs C5, C6, C7, and C8 are the core temperatures (in degrees Centigrade) of the mixtures M5, M6, M7 and M8 respectively. The common horizontal axis for all eight graphs in Fig. 2 is time (in minutes) from commencement of in-mould reactions. The points "w" mark the start of water cooling.

In mixture M5 the magnesium carbonate of mixture M3 was replaced by sodium bicarbonate.

In mixture M6 and M7, the "Genitron AC4" (finely particulate azodicarbonamide) of mixture M3 are replaced by "Genitron AC2" and "Genitron 18/26" respectively, which are progressively coarser grades of particulate azodicarbonamide.

In mixture M8, the magnesium carbonate of mixture M3 was replaced by precipitated silica ("Hi Sil 233").

Fig. 2 shows that magnesium carbonate and sodium bicarbonate both lower the magnesium temperature developed in the mould, while the coarser grades of particulate azodicarbonamide delay the in-mould reaction of the components of the mixture.

In selecting a suitable mixture for carrying out the process of the present invention, the objective is to keep the peak temperature down (decomposition of the blowing agent is exothermic, and therefore the core temperature can get very high).

EXAMPLE 1:-

Polar polymers such as EVA and EMA can be processed without the aid of polarising agent and the following is an example using Dupont's Elvax 265 EVA resin which has a vinyl acetate content of 28% and a melt flow index of 3.

| Ingredients | |
|---|---|
| Resin ("Elvax 265") | 500 grammes |
| Light magnesium carbonate | 25 grammes |
| Azodicarbonamide ("Genitron AC4" (Shering)) | 80 grammes |
| Zinc compound blowing agent ("Genitron AF100" (Schering)) | 30 grammes |
| 1.3/1.4(bisterbutylperoxypropyl)benzene (peroxide) | 8 grammes |

The resin was melted on the rolls of a two-roll mill which were heated to 110 degrees Centigrade. When the resin had melted the magnesium carbonate was added followed by the blowing agents and the peroxide last. After through mixing the compound was stripped from the mill and rolled into a pig which was placed in a Barwell ram extruder where it was subjected to a high vacuum to remove all free air. The compound was extruded into a 60 mm diameter round section. A preheated mould 110 mm in diameter and 40 mm deep was loaded with the compound and placed in a press and heated by steam at 170 degrees Centigrade for 20 minutes and then cooled by cold water for a further 44 minutes when the moulding was removed from the mould. On removal from the mould the temperature of the exterior of the moulding was 14 degrees Centigrade and the temperature of the centre was 125 degrees Centigrade. The moulding was left overnight to cool thoroughly, after which the centre of the moulding had also cooled to 14 degrees Centigrade.

The next day the moulding was placed in a microwave oven and heated with a power of 600 watts for 5 minutes which caused expansion of the moulding producing an even textured foam of density 0.022 (22 kilograms per cubic metre).

If a non-polar polymer such as VLDPE (very low density polyethylene) is to be used a polarising agent must be added to the compound if very long microwave heating times are to be avoided. Three parts by weight of HAF carbon black per hundred parts by weight of resin has been found to be satisfactory or if a light coloured foam is required 5 parts by weight of precipitated silica parts by weight and 5 parts by weight of titanium dioxide per hundred parts by weight of resin will have a similar effect.

There are many other polar additives and polymers that can be used but care must be taken to avoid interference with the blowing agent and cross-linking systems.

The zinc compound blowing agent is used as an activator for the azodicarbonamide blowing agent.

It should be noted that it is prefererable that the volume of material loaded into the mould is less than the volume of the mould itself so that the material expands under the effect of heat to fill the mould before the blowing agent decomposes. However, the volume of material may alternatively be the same as the volume of the mould although this tends to generate high pressure loadings on the mould.

EXAMPLE 2:-

In this second example, the resin is "Norsoflex 2260" which is a very low density polyethylene from Orkem (UK) Ltd, with a melt flow index of 12 and a density of 0.910 (910 kilogrammes per cubic metre).

| | |
|---|---|
| Resin ("Norsoflex 2260") | 500 grammes |
| Light magnesium carbonate | 25 grammes |
| Azodicarbonamide ("Genitron AC4" (Schering)) | 64 grammes |
| Zinc compound blowing agent ("Genitron AF100" (Schering)) | 24.4 grammes |
| Silica ("Hi Sil 233") | 50 grammes |
| Titanium dioxide | 20 grammes |
| 1.3/1.4 (bisterbutylperoxypropyl) benzene (peroxide "Retilox F40") | 7.5 grammes |

These substances were processed in the manner described in Example 1.

A tough fine-textured foam was produced with a density of 0.039 (39 kilogrammes per cubic metre).

EXAMPLE 3:-

In this third example, a mixture of two resins was used. One resin was "Escor EX902" which is an ethylene methylacrylate copolymer from Exxon Chemicals Ltd. The other resin was "Vistalon 2504" which is an EPDM (ethylene propylene) rubber from Exxon Chemicals Ltd.

| | |
|---|---|
| Resin 1 ("Escor EX902") | 350 grammes |
| Resin 2 ("Vistalon 2504") | 150 grammes |
| Light magnesium carbonate | 25 grammes |
| Azodicarbonamide ("Genitron AC4" (Schering)) | 64 grammes |
| Zinc compound blowing agent ("Genitron AF100" (Schering)) | 24.4 grammes |
| 1.3/1.4 (bisterbutylperoxypropyl) benzene (peroxide "Retilox F40") | 8 grammes |

These substances were processed as described in Example 1.

The foam produced was very flexible and rubbery, and composed of very fine even cells, with a density of 0.035 (35 kilogrammes per cubic metre).

EXAMPLE 4:-

In this fourth example, a mixture of two resins was used. One resin was "LDPE 2304" which is a low density polyethylene from DSM (UK) Ltd. The other resin was "Elvax 265" from Dupont Ltd, as used in Example 1.

| | |
|---|---|
| Resin 1 ("LDPE 2304") | 250 grammes |
| Resin 2 ("Elvax 265") | 250 grammes |
| Zinc stearate | 5 grammes |
| Silica ("Hi Sil 233") | 30 grammes |
| Azodicarbonamide ("Genitron AC4" (Schering)) | 25.5 grammes |
| Zinc compound blowing agent ("Genitron AF100 "(Schering)) | 9.5 grammes |
| 1.3/1.4 (bisterbutylperoxypropyl) benzene (peroxide "Retilox F40") | 7.5 grammes |
| Magnesium carbonate | 15 grammes |

These substances were processed as described in Example 1.

The foam produced was stiff with fine cells and even shape, with a density of 0.060 (60 kilogrammes per cubic metre).

While the invention has been described with particular reference to the various Examples given above, the invention is not restricted thereto, and modifications and variations can be adopted without departing from the scope of the invention as defined in the appended claims.

**Claims**

1. A method of producing a foamed polymer, said method comprising the steps of providing a mixture comprising a material for forming a cross-linked polymer which is then to be foamed, said mixture further comprising a cross-linking agent and a blowing agent, said method further comprising the further steps of placing an amount of said mixture in a mould, heating the mixture in the mould to form a cross-linked polymer and to decompose the blowing agent, causing or allowing the cross-linked polymer to cool until the differential temperature between the surface of the cross-linked polymer and the interior of the cross-linked polymer falls below a predetermined maximum differential temperature, and then subjecting the cooled cross-linked polymer to dielectric heating such as to cause the cross-linked polymer to be heated and foamed.

2. A method as claimed in Claim 1 wherein the dielectric heating to which the cooled cross-linked polymer is subjected is produced by irradiation of the moulded polymer with microwaves.

3. A method as claimed in Claim 1 wherein the dielectric heating to which the cooled cross-linked polymer is subjected is produced by irradiation of the cross-linked polymer with radio-frequency waves.

4. A method as claimed in any preceding Claim wherein the cooling of the cross-linked polymer incorporating the decomposed blowing agent takes place entirely before the cross-linked polymer is released from the mould for subsequent dielectric heating.

5. A method as claimed in any of Claims 1 to 3 wherein the cross-linked polymer incorporating the decomposed blowing agent is partially cooled sufficiently that the mould can be opened and the partially cooled cross-linked polymer removed from the mould without substantive damage to the partially cooled cross-linked polymer for subsequent further cooling outside the mould until said differential temperature between the surface of the cross-linked polymer and the interior of the cross-linked polymer falls below said predetermined maximum differential temperature.

6. A method as claimed in any preceding Claim wherein the polymer is a polyolefin.

7. A method as claimed in any preceding Claim wherein said material for forming a cross-linked polymer comprises a polymer resin.

8. A method as claimed in preceding Claim wherein the polarity of the material, and hence the effectiveness of the microwave heating, is increased by adding polar material to said mixture.

9. A method as claimed in Claim 8 wherein said polar material comprises carbon black, silica, zinc oxide or titanium dioxide, or small amounts of a polar polymer.

10. A foamed polymer when produced by the method as claimed in any of Claims 1 to 9.

FIG.1

EP 0 367 409 A2

Fig.2

EP 0 367 409 A2